# EUROPEAN PATENT SPECIFICATION

(11) **EP 0 702 264 B1**
(45) Date of publication and mention of the grant of the patent: **14.07.1999**
(21) Application number: 95306326.0
(22) Date of filing: 11.09.1995
(51) Int. Cl.: G03B 27/46, G03B 27/70

(54) **Photographic printing method and apparatus**
Fotografisches Kopierverfahren und -gerät
Méthode et appareil de tirage photographique

(30) Priority: 13.09.1994 JP 21905394
(43) Date of publication of application: 20.03.1996
(73) Proprietor: NORITSU KOKI CO., LTD., Wakayama-shi, Wakayama (JP)
(72) Inventor: Yamamoto, Masahiro, Wakayama-shi, Wakayama (JP)
(74) Representative: Hillier, Peter

(56) References cited:
- EP-A- 0 306 062
- EP-A- 0 550 837
- EP-A- 0 610 825
- GB-A- 2 267 354

## Description

### Background of the Invention

The present invention relates to an improvement of photographic printing method and apparatus applying an image rotation printing method for rotating an image of each image frame of a negative film by a desired angle, and printing on a copying material.

Generally, photographs in a print size relation of, for example, L size and 2L size (or E size and 2E size), that is, photographs same in aspect ratio and different in size must be printed on a band-shaped copying material such as photographic paper, by changing the printing conditions such as negative film feed direction and enlarging rate. Accordingly, such photographs could not be printed by one film set (so-called one pass), and the printing job was complicated. Besides, as required, it was necessary to change to copying materials of different width, and this changing jog took time and labor.

To solve these problems, the present applicant filed and proposed image rotation printing method and apparatus in Japanese Laid-open Patent No. 5-333445, which is employed at the present.

In the disclosed image rotation printing apparatus, the magnification of the image transmission light of the light source for irradiating in every image frame of negative film is adjusted by a printing lens, and the optical path is inverted by two mutually confronting mirrors to print an image on the copying material.

The two mirrors are inclined by 45 degrees to the vertical direction, and when the pair of mirrors are rotated by 45 degrees back and forth from the reference position (0 degree), print images rotated by 90 degrees and 270 degrees from the original image are obtained.

That is, by varying the direction of the optical path inverted through a simple mirror combination structure, the image can be rotated on the optical axis, and the original image can be printed on a copying paper by inverting its aspect ratio. Therefore, only by varying the direction of the optical path without changing the feed direction of the negative film, images enlarged and multiplied in various directions can be printed on the copying material.

However, when printing by using such image rotation printing apparatus, the operator must set and enter the printing conditions, such as print size, in every image frame of negative film at the site, and cannot leave the printing job for other job during processing. Hence, improvement of such job has been demanded.

The invention is devised in the light of such conventional problem, and it is a primary object thereof to present photographic printing method and apparatus capable of improving the job efficiency of the operator in the printing process, by processing printing by automatically changing the direction of print image and the like on the basis of the print size data of every image frame of negative film preset prior to printing process.

### Summary of the Invention

The object is achieved in terms of the photographic printing method of the invention according to claim 1. The method comprises feeding the print size of each image frame of negative film preliminarily from outside, storing the input print size data of each image frame, supplying a band-shaped copying material along a conveyed negative film, emitting light from one side of image frame of negative film, projecting image transmission light passing through an image frame to the copying material through plural mutually confronting mirrors for inverting the optical path of image transmission light, and printing the image of image frame rotated on the optical axis to the copying material by adjusting to a proper magnification on the basis of the stored print size data of each image frame.

The photographic printing apparatus of the invention is defined in claim 2. The apparatus is a photographic printing apparatus designed to print a desired size having one of the sides of image of negative film corresponding to the width direction of a band-shaped copying material or print part of image in a desired size, comprising a copying material supply device for supplying a band-shaped copying material along a conveyed negative film, a light source for emitting light to an image frame of negative film, a printing lens for adjusting the magnification of image transmission light passing through the negative film, a mirror unit composed of plural mutually confronting mirrors for inverting the optical path of the image transmission light, a rotation drive device for rotating or moving any one or plural mirrors of the mirror unit, an external input device for feeding print size data of every image frame of negative film from outside, memory device for storing the input print size data of every image frame, and means for printing the image of image frame rotated by a present rotational angle on the optical axis to the copying material by properly adjusting the magnification, on the basis of the stored print size data of every image frame.

According to the photographic printing method of the invention, the print size data of every image frame of negative film is preliminarily entered from outside, and the input print size data of every image frame is preliminarily stored. When inverting the transmission light of the image of the image frame and printing on the copying material, the stored print size data of every image frame is read out. The image is rotated by the mirror when the mirror position is rotated from the original image of the negative film, and when the rotational angle is, for example, 90 degrees or 270 degrees, by properly adjusting the magnification, the image of the reverse aspect ratio relative to the copying material from the aspect ratio of the negative film can be obtained automatically without any manual labor.

### Brief Description of the Drawings

Fig. 1 is a schematic structural diagram showing a photographic printing apparatus in an embodiment of the invention.

Fig. 2 is a perspective view showing a schematic structure of printing unit of the photographic printing apparatus in Fig. 1.

Fig. 3 is a schematic structural diagram showing a side view of a paper supply device furnished in the photographic printing apparatus in Fig. 1.

Fig. 4 is a block diagram showing a control system of the photographic printing apparatus in Fig. 1.

Fig. 5 is a flow chart showing the processing procedure of a control device of the photographic printing apparatus in Fig. 1.

### Detailed Description of the Preferred Embodiment

Referring now to the accompanying drawings, a preferred embodiment of the invention is described below for better understanding of the invention. It must be noted, however, that the embodiment is only an illustrated example of the invention and is not intended to limit the technical scope of the invention.

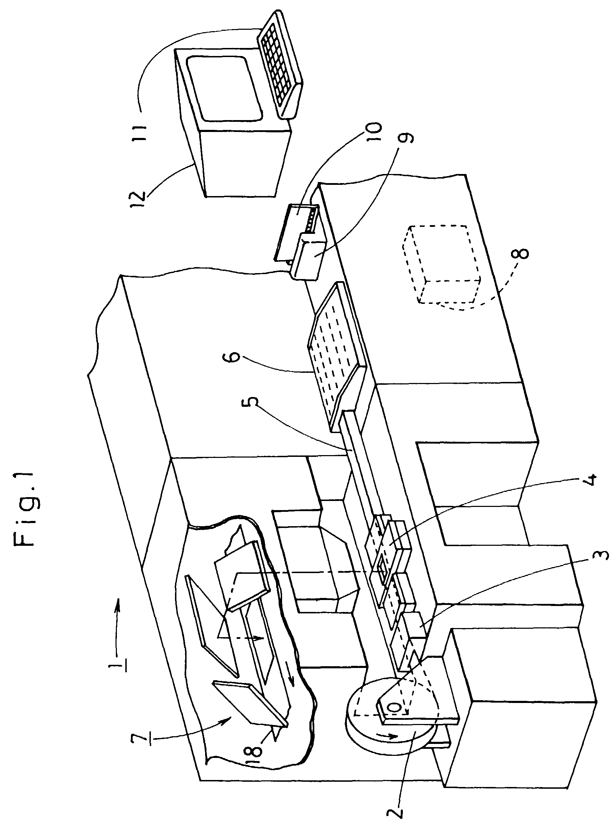

A schematic structure of the photographic printing apparatus of the embodiment is shown in Fig. 1. In the photographic printing apparatus 1 in Fig. 1, reference numeral 2 is a reel on which a negative film is wound, 3 is a film scanner for reading the image information of the negative film, 4 is a negative mask for dividing the image information of the negative film into every image frame as described below, 5 is a conveying guide for conveying and guiding the negative film from the negative mask 4, 6 is a film sleever for performing after-treatment on the negative film from the conveying guide 5, 7 is a printing unit for printing the image information from the negative mask 4 onto paper (an example of copying material) 18, 8 is a control device (an example of rotational angle calculation unit) responsible for printing action of the photographic printing apparatus 1, 9 is a data reader-writer for writing and reading various data on a memory card 10 having a magnetic memory unit (not shown) on the surface, 11 is an external input device represented by a keyboard or the like, and 12 is a monitor for displaying the calculation result by the control device 8 or the image information about the film.

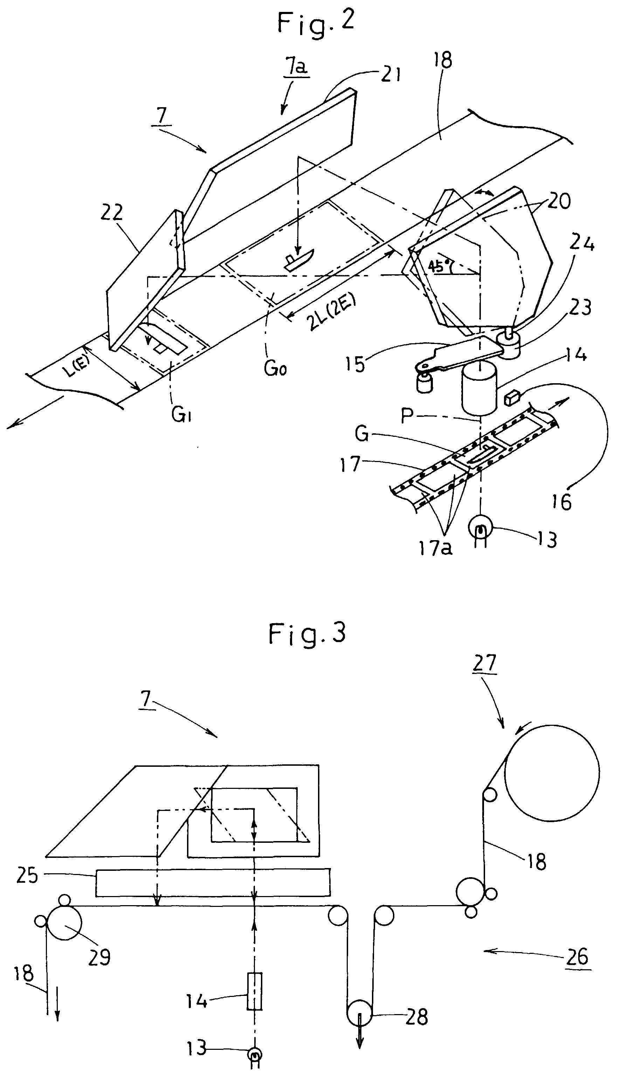

Fig. 2 is a perspective view showing a schematic structure of the printing unit of the photographic printing apparatus. In the diagram, the printing unit 7 comprises a light source 13 for emitting light toward a negative film 17 from beneath, a printing lens 14 for adjusting the magnification of the image light (the optical axis indicated by single dot chain line P) passing through the image (original image) of every image frame 17a of the negative film 17, a shutter 15 for limiting the passing time of the image light, an image frame detector 16 for detecting the image frame to be presented for printing process on the basis of the position of the edge of image frame of the negative film 17, a mirror unit 7a for inverting the optical path of the image light and leading into the paper 18, and a rotation drive motor 23 mounted on a mirror 20 of the mirror unit 7a. The light source 13, printing lens 14, and shutter 15 are conventional ones, and hence their detailed description is omitted.

In the mirror unit 7a of the embodiment, the first mirror 20 is free to rotate, and second mirror 21 and third mirror 22 are fixed at reference position (0 degree) and position of 45 degrees ahead of paper 18 running direction, respectively. The mirror 20, and the mirror 21 or 22 confront each other at an inclination of 45 degrees to the vertical direction. A drive shaft 24 of the rotation drive motor 23 (an example of rotation drive device) is connected to the lower part of the mirror 20 at a position of which axial center is deviated from the optical axis P.

The size of the mirrors 20, 21, 22 is large enough to include the original image G of the negative film 17, and images (print images) G0, G1 on the paper 18, respectively. The mirror 20 is located at a position immediately above the negative film 17 including its original image G, and the optical axis P from the light source 13 beneath the negative film 17 is nearly in the center of the reflection plane. The mirror 21 is positioned so that the direction confronting the mirror 20 may be orthogonal to the paper 18, and that the image may come nearly in the center of the paper width direction when the image is emitted to the paper 18 by inverting the image transmission light by the mirror 21. The orthogonal intersection of the paper 18 and negative film 17 of the optical path inverted by the two mirrors 20, 21 is the reference position (mirror rotational angle = 0 degree).

In this mirror unit 7a, first in printing process at the reference position (0 degree), the original image G of the negative film 17 is enlarged and magnified at a constant aspect ratio, and is printed on the paper 18 as image G0 in the same phase without being rotated.

Consequently, when the mirror 20 is rotated by 45 degrees from the reference position ahead in the paper 18 running direction (counterclockwise), the mirror 20 comes to the position indicated by twin dot chain line in the diagram. At this time, the absolute position of the optical axis P is not changed, and hence the relative position of the optical axis P with respect to the mirror 20 is changed.

As a result, the image G1 being reflected by the mirror 22 and projected on the paper 18 is rotated 90 degrees counterclockwise from the image G0 of the reference position reflected by the mirror 21 (in the same phase as the original image G of the negative film 17). In this case, the size of the image G1 can be adjusted to a desired size by the printing lens 14, and therefore the length in the width direction should be adjusted to be within the width of the paper 18. That is, without rotating the feed direction of the negative film 17, only by rotating the mirror 20 by the rotation drive motor 23, the lateral dimension of the image G1 becomes the vertical dimension of the image G0, that is, a different size can be printed at the same aspect ratio.

Fig. 3 is a schematic structural diagram showing a side view of paper supply device furnished in the photographic printing apparatus. In the diagram, the paper supply device 26 (an example of copying material supply device) comprises a paper mask 25, a paper roll holder 27, a dancer roller 28 provided in the paper conveying route, and a feed roller 29. By this paper supply device 26, the paper 18 is sent into the paper mask 25 incorporating the printing unit 7.

When printing by using the printing unit 7, a relatively wide exposed portion may be generated between the previous print image (G1) and print image (G0) after image rotation. In this paper supply device 26, however, in such a case, the paper 18 can be rewound in the reverse direction of ordinary conveying direction. As a result, wasteful spending of the paper 18 is prevented.

If the rewound paper 18 sags on the way, it may cause defect in printing process, and therefore a tension is applied by the dancer roller 28 to prevent sag, so that the paper 18 can be rewound securely only by the necessary dimension. By the paper supply device 26 having such mechanism, the changeover efficiency of print size is improved.

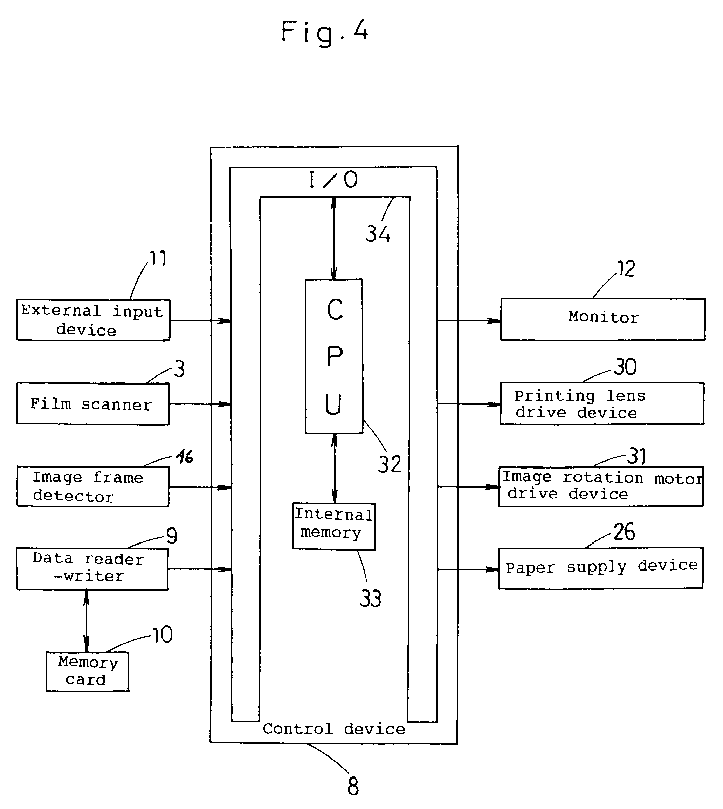

Fig. 4 is a block diagram showing a control system of the photographic printing apparatus. In the diagram, the control device 8 is composed around a CPU (central processing unit) 32 for calculating the timing, pulse width and others of the signals, and outputting control signals, and an internal memory 33 and input and output ports 34 are connected in the CPU 32 so that the signal can be transmitted.

At the input side of the input and output ports 34 of the control device 8, the external input device 11, film scanner 3, image frame detector 16, and data reader-writer 9 are respectively connected so that signal can be transmitted, and at the output side of the input and output ports 34, printing lens drive device 30, image rotation motor drive device 31, paper supply device 26, and data reader-writer 9 are connected so that the signal can be transmitted. The printing lens drive device 30, image rotation motor drive device 31, and paper supply device 26 are constituted so as to be driven and controlled by the control signal from the CPU 32.

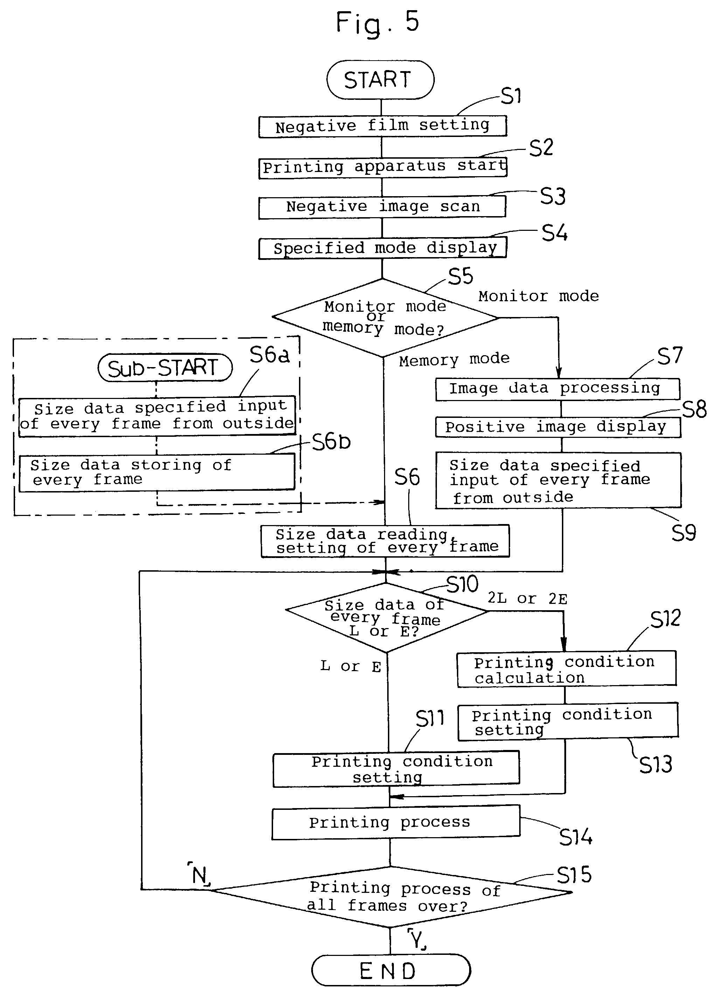

The photographic printing method by the photographic printing apparatus 1 in the embodiment is described below while referring to the flow chart in Fig. 5.

First, when the negative film 17 from the reel 2 is set at a specified position of the photographic printing apparatus 1 (step S1), the photographic printing apparatus 1 starts (step S2). Herein, the film scanner 3 reads the image information of the negative film 17 (step S3), and stores the information in the internal memory 33 through the CPU 32.

On the other hand, as a characteristic function of the apparatus of the embodiment, the image information data and print size data about each image frame 17a of the negative film 17 are preliminarily specified and entered by the operator through the external input device 11 (step S6a of sub-start), and stored in the memory card 10 through the control device 8 and data writer-reader 9 (step S6b of the same).

Herein, on the screen of monitor 12, for example, the selection of the specified mode is displayed, such as "memory specified mode" for automatic setting and input of the print size specification in each image frame 17a on the basis of the data corresponding to the each image frame 17a of the negative film 17 preliminarily stored in the memory card 10, or "monitor specified mode" for on-site setting and input of the print size by the operator through the external input device while referring to the image about the film displayed on the monitor 12 (step S4).

The operator sets and enters the desired specified mode from the external input device 11, and when the input specified mode is the memory specified mode (memory mode at step S5), the print size data of each image frame 17a is read out from the memory card 10 by the data reader-writer 9, and is set in the control device 8 (step S6).

When the specified print size set at this time is L size (or E size) (L or E at step S10), the printing conditions are set directly, such as the mirror position for the L size (in this case, position at mirror rotational angle of 45 degrees) which is the standard size seen from the width of the paper 18, the paper feed amount for L size (or E size), and magnification of printing lens 14 for L size (or E size) (step S11).

On the other hand, at step S10,when the specified print size is 2L size (or 2E size) (2L or 2E at step S10), the printing conditions are converted to the mirror position for 2L size (or 2E size) (reference position of mirror rotational angle returning 45 degrees clockwise), paper feed amount for 2L size (or 2E size), and the magnification of printing lens 14 for 2L size (or 2E size) (step S12), and the calculated printing conditions are set instead of the standard printing conditions (step S13).

In this way, depending on the printing conditions set in every image frame 17a of the negative film 17, the rotation drive amount of the mirror 20, paper feed amount by the paper supply device 26, and the magnification of the printing lens 14 are adjusted, and then the shutter 15 is driven to print the images G0, G1 corresponding to each image frame 17a on the paper 18 (step S14). Such processing action by printing of each image frame 17a (step S10 to step S15) is executed repeatedly until all image frames 17a to be processed of the negative film 17 are completed (Y at step S15).

However, as the external input device and data reader-writer, not limited to those attached to the photographic printing machine main body, they may be independent of the apparatus main body and may be disposed, for example, on the shop counter, and it may be allowed to write and read freely in the memory card 10. In such a case, the memory card 10 in which various data desired by the customer are written on the shop counter may be brought into the photographic printing apparatus 1, and it may be read by the data reader-writer 9.

On the other hand, the apparatus of the embodiment also possesses a function for specifying the print size of each image frame 17a at the time of printing process when desired at the site. That is, if the specified mode entered at step S5 is the monitor specified mode (monitor mode at step S5), the control device 8 converts the image information data of the negative film 17 stored in the internal memory 33 being read by the film scanner 3 to positive image information data by known image processing technique (step S7), and displays the positive image for plural image frames 17a, for example, corresponding to the positive image information data on the monitor 12 (step S8).

Herein, the operator, while referring to the positive image displayed on the monitor 12, specifies and enters the print size data desired in each image frame 17a at the site from the external input device 11, and the input print size data of each image frame 17a is set in the control device 8 (step S9). The successive processing action for image rotation is same as in the foregoing steps S10 to S15, and the description is omitted.

As stated herein, according to the photographic printing apparatus 1 of the embodiment, through the mutually confronting mirror 20 and mirror 22, by rotating the running direction of the optical path, the image G1 emitted on the paper 18 is rotated by a specified angle from the original image G on the original negative film 17, and therefore, when printing the original image G on the paper 18, by rotating the original image G by, for example, 90 degrees, the original image G can be printed at an inverse aspect ratio on the paper 18. Therefore, only by varying the direction of the optical path, without having to change the feed direction of the negative film 17, enlarged and magnified images in various directions can be printed on the paper 18.

That is, once the negative film 17 is set, different sizes such as L and 2L size (or E and 2E size) can be printed by one pass in the sequence of image frames 17a of the negative film 17, and hence it does not require the complicated operation of repeating plural passes by printing the same size first in a pass, setting the negative film 17 newly, and printing the other size.

Besides, by the combination with the paper width, various prints can be processed, and exclusive printing apparatus for each size is not needed.

Moreover, if plural specified print sizes coexist, they can be processed by one pass, and hence the printing processing time per negative film is shortened, and the customer service is notably enhanced by the shortening of the print delivery time.

In the embodiment, the memory card 10 and data reader-writer 9 are used as the memory device, but omitting them, the print size data of each image frame 17a specified and entered from the external input device 11 may be preliminarily stored in the internal memory 33 for the CPU 32 of the control device 8, and the print size data may be read out from the internal memory 33 as required during the printing operation. In such a case, the constitution may be inexpensive.

In the embodiment, the mirror unit 7a is composed of fixed mirrors 21, 22 and a rotatable mirror 20, but is not limited to this, for example, two confronting mirrors 20, 21 may be formed into one body, and the mirrors 20 and 21 may be rotated by, for example, 45 degrees back and forth in one body.

## Claims

1. A photographic method of printing the frame images (G) of a negative film (17) having a plurality of image frames (17a), comprising :
supplying a band-shaped copying material (18) along a direction parallel to the conveying direction of the negative film;
emitting light from one side of an image frame of the negative film;
projecting the image transmission light passing through the negative image frame onto the copying material via an optical system comprising a printing lens (14) and a mirror unit (7a) adapted to reflect the transmission light and to rotate the image on the projection optical axis (P), the mirror unit including a plurality of mutually confronting mirrors (20, 21, 22), the printing lens and the mirror unit being arranged to selectively project the image of the image frame onto the copying material in first and second modes differing one from each other in the magnification value of the image and the orientation of the projected image with respect to the copying material so that the images printed in said first and second modes (G₀, G₁) are the same in aspect ratio but different in size, one of the sides of each printed image corresponding to the width direction of the printing part of the band -shaped copying material (18); characterised by
storing in a memory device (10) prior to printing print size data supplied from outside for each image frame (17a)
selecting the print size data for the current image frame to be printed,
rotating the optical path depending on the selected print size data,
and altering the magnification of the optical system depending on the print size data,
whereby the frame image is printed in one of said first and second modes according to the selected print size data.

2. A photographic printing apparatus (1) for printing the frame images (G) of a negative film (17) having a plurality of image frames (17a), comprising;
a copying material supply device (26) for supplying a band-shaped copying material (18) along a direction parallel to the conveying direction of the negative film,
a light source (13) for emitting light from one side of an image frame of the negative film,
a printing lens (14) and a mirror unit (7a) comprising a plurality of mutually confronting mirrors (20, 21, 22) for projecting the image transmission light passing through the negative film frame onto the copying material,
a rotation drive device (23) for rotating or moving at least one mirror (20) of the mirror unit,
a magnification lens drive device (30) for adjusting the magnification of the printing lens,
an external input device (11) for supplying print size data for every image frame of the negative film, and control means (8) for controlling the rotation drive device and the magnification lens drive device (30), wherein the position of said at least one mirror and the magnification of the printing lens are adjusted to selectively project the image of the image frame onto the copying material in first and second modes differing one from each other in the magnification value of the image and the orientation of the projected image with respect to the copying material so that the images printed in said first and second modes (G₀, G₁) are of different size but have the same aspect ratio, one of the sides of each printed image corresponding to the width direction of the printed part of the band-shaped copying material, characterised by
a memory device (10) for storing the input print size data of each image frame prior to printing,
data accessing means (9) for selecting the stored print size data corresponding to the image frame to be printed from the stored print size data of all the image frames, and outputting the selected print size data to said control means,
whereby the image of the negative image frame is printed to the copying material (18) with properly adjusted magnification and correct rotation of the image on the optical projection axis, each determined solely on the stored print size data of each frame.

## Patentansprüche

1. Photographisches Verfahren zum Abziehen der Rahmenbilder (G) eines Negativfilms (17), der eine Vielzahl von Bildrahmen (17a) hat, wobei das Verfahren die Schritte aufweist, bei denen:
ein bandförmiges Abzugsmaterial (18) in einer zu der Transportrichtung des Negativfilms parallelen Richtung zugeführt wird;
Licht auf einer Seite eines Bildrahmens des Negativfilms ausgesandt wird;
das Bild-Durchgangslicht, das durch den Negativfilm-Bildrahmen hindurchgeht, über ein optisches System mit einer Abziehlinse (14) und einer Spiegeleinheit (7a), die ausgelegt ist, um das Durchgangslicht zu reflektieren und das Bild um die optische Projektionsachse (P) zu drehen, auf das Abzugsmaterial projiziert wird, wobei die Spiegeleinheit eine Vielzahl von einander gegenüber angeordneten Spiegeln (20, 21, 22) umfaßt, und wobei die Abziehlinse und die Spiegeleinheit so angeordnet sind, daß sie das Bild des Bildrahmens bei einer ersten und einer zweiten Betriebsart, die sich in dem Vergrößerungswert des Bildes und der Orientierung des projizierten Bildes bezüglich des Abzugsmaterials voneinander unterscheiden, in selektiver Weise auf das Abzugsmaterial projizieren, so daß die bei der ersten und der zweiten Betriebsart abgezogenen Bilder (G₀, G₁) hinsichtlich des Bildseitenverhältnisses gleich, aber hinsichtlich der Größe verschieden sind, wobei eine der Seiten jedes abgezogenen Bildes der Breitenrichtung des Abziehteils des bandförmigen Abzugsmaterials (18) entspricht; dadurch gekennzeichnet, daß
vor dem Abziehen die von außerhalb für jedem Bildrahmen (17a) gelieferten Abziehgrößendaten in einer Speichervorrichtung (10) gespeichert werden,
die Abziehgrößendaten für den abzuziehenden laufenden Bildrahmen ausgewählt werden,
der optische Pfad in Abhängigkeit von den ausgewählten Abziehgrößendaten gedreht wird,
und die Vergrößerung des optischen Systems in Abhängigkeit von den Abziehgrößendaten verändert wird,
wodurch das Rahmenbild entsprechend den ausgewählten Abziehgrößendaten bei der ersten oder der zweiten Betriebsart abgezogen wird.

2. Photographisches Abziehgerät (1) zum Abziehen der Rahmenbilder (G) eines Negativfilms (17), der eine Vielzahl von Bildrahmen (17a) hat, aufweisend:
eine Abzugsmaterial-Zuführvorrichtung (26) zum Zuführen eines bandförmigen Abzugsmaterials (18) in einer zu der Transportrichtung des Negativfilms parallelen Richtung,
eine Lichtquelle (13) zum Aussenden von Licht auf einer Seite eines Bildrahmens des Negativfilms,
eine Abziehlinse (14) und eine Spiegeleinheit (7a), die eine Vielzahl von einander gegenüber angeordneten Spiegeln (20, 21, 22) aufweist, zum Projizieren des durch den Negativfilm-Rahmen hindurchgehenden Bild-Durchgangslichts auf das Abzugsmaterial,
eine Drehantriebsvorrichtung (23) zum Drehen oder Bewegen mindestens einen Spiegels (20) der Spiegeleinheit,
eine Vergrößerungslinsen-Antriebsvorrichtung (30) zum Einstellen der Vergrößerung der Abziehlinse,
eine externe Eingabevorrichtung (11) zum Liefern von Abziehgrößendaten für jeden Bildrahmen des Negativfilms, und Steuermittel (8) zum Steuern der Drehantriebsvorrichtung und der Vergrößerungslinsen-Antriebsvorrichtung (30), wobei die Position des mindestens einen Spiegels und die Vergrößerung der Abziehlinse so eingestellt werden, daß das Bild des Bildrahmens bei der ersten und der zweiten Betriebsart, die sich in dem Vergrößerungswert des Bildes und der Orientierung des projizierten Bildes bezüglich des Abzugsmaterials voneinander unterscheiden, in selektiver Weise auf das Abzugsmaterial projiziert wird, so daß die bei der ersten und der zweiten Betriebsart abgezogenen Bilder (G₀, G₁) eine verschiedene Größe, aber das gleiche Bildseitenverhältnis haben, wobei eine der Seiten jedes abgezogenen Bildes der Breitenrichtung des abgezogenen Teils des bandförmigen Abzugsmaterials entspricht, gekennzeichnet durch
eine Speichervorrichtung (10) zum Speichern der eingegebenen Abziehgrößendaten jedes Bildrahmens vor dem Abziehen,
Datenzugriffsmittel (9) zum Auswählen der gespeicherten Abziehgrößendaten, die dem abzuziehenden Bildrahmen entsprechen, aus den gespeicherten Abziehgrößendaten aller Bildrahmen, und Ausgeben der ausgewählten Abziehgrößendaten an die Steuermittel,
wodurch das Bild des Negativfilm-Bildrahmens bei richtig eingestellter Vergrößerung und richtiger Drehung des Bildes um die optische Projektionsachse auf das Abzugsmaterial (18) abgezogen wird, wobei die Vergrößerung und die Drehung des Bildes allein aufgrund der gespeicherten Abziehgrößendaten jedes Rahmens bestimmt werden.

## Revendications

1. Procédé photographique d'impression des images encadrées (G) d'un film négatif (17) comportant une pluralité de cadres d'image (17a), comprenant les étapes consistant à:
amener un matériau de tirage en forme de bande (18) le long d'une direction parallèle à la direction de transport du film négatif;
émettre de la lumière depuis un côté d'un cadre d'image du film négatif;
projeter la lumière de transmission d'image traversant le cadre d'image négatif sur le matériau de tirage via un système optique comprenant une lentille d'impression (14) et une unité de miroirs (7a) apte à réfléchir la lumière de transmission et à faire tourner l'image sur l'axe optique de projection (P), l'unité de miroirs comprenant une pluralité de miroirs se faisant face mutuellement (20, 21, 22), la lentille d'impression et l'unité de miroirs étant disposées de façon à projeter sélectivement l'image du cadre d'image sur le matériau de tirage dans des premier et second modes dont les valeurs d'agrandissement de l'image et les orientations de l'image projetée par rapport au matériau de tirage diffèrent les unes des autres, de sorte que les images imprimées dans lesdits premier et second modes (G₀, G₁) ont le même rapport de forme mais ont une taille différente, un des côtés de chaque image imprimée correspondant à la direction de la largeur de la partie d'impression du matériau de tirage en forme de bande (18); caractérisé par les étapes consistant à:
stocker dans un dispositif à mémoire (10) avant l'impression, des données de dimensions d'impression, appliquées depuis l'extérieur, pour chaque cadre d'image (17a);
sélectionner les données de dimensions d'impression pour le cadre d'image courant à imprimer,
tourner le chemin optique en fonction des données de dimensions d'impression sélectionnées,
et modifier le grossissement du système optique en fonction des données de dimensions d'impression, ce par quoi l'image encadrée est imprimée dans un desdits premier et second modes selon les données de dimensions d'impression sélectionnées.

2. Appareil d'impression photographique (1) pour imprimer les images encadrées (G) d'un film négatif (17) comportant une pluralité de cadres d'image (17a), comprenant;
un dispositif d'amenée d'un matériau de tirage (26) destiné à amener un matériau de tirage en forme de bande (18) le long d'une direction parallèle à la direction de transport du film négatif,
une source lumineuse (13) destinée à émettre de la lumière depuis un côté d'un cadre d'image du film négatif,
une lentille d'impression (14) et une unité de miroirs (7a) comprenant une pluralité de miroirs se faisant face mutuellement (20, 21, 22) destinée à projeter la lumière de transmission d'image traversant le cadre de film négatif sur le matériau de tirage,
un dispositif d'entraînement en rotation (23) destiné à faire tourner ou à déplacer au moins un miroir (20) de l'unité de miroirs,
un dispositif d'entraînement de lentille d'agrandissement (30) destiné à régler le grossissement de la lentille d'impression,
un dispositif d'entrée externe (11) destiné à appliquer des données de dimensions d'impression pour chaque cadre d'image du film négatif, et
un moyen de commande (8) destiné à commander le dispositif d'entraînement en rotation et le dispositif d'entraînement de lentille d'agrandissement (30), dans lequel la position dudit au moins un miroir et le grossissement de la lentille d'impression sont réglés pour projeter sélectivement l'image du cadre d'image sur le matériau de tirage dans des premier et second modes dont les valeurs d'agrandissement de l'image et les orientations de l'image projetée par rapport au matériau de tirage diffèrent les unes des autres, de sorte que les images imprimées dans lesdits premier et second modes (G₀, G₁) ont une taille différente mais ont le même rapport de forme, un des côtés de chaque image imprimée correspondant à la direction de la largeur de la partie imprimée du matériau de tirage en forme de bande; caractérisé par
un dispositif à mémoire (10) destiné à stocker les données de dimensions d'impression d'entrée de chaque cadre d'image avant l'impression,
un moyen d'accès aux données (9) destiné à sélectionner les données de dimensions d'impression stockées correspondant au cadre d'image à imprimer à partir des données de dimensions d'impression stockées de tous les cadres d'image, et à envoyer les données de dimensions d'impression sélectionnées vers ledit moyen de commande, ce par quoi l'image du cadre d'image négatif est imprimée sur le matériau de tirage (18), avec un agrandissement réglé avec précision et une rotation correcte de l'image sur l'axe optique de projection, chacun étant déterminé seulement sur la base des données de dimensions d'impression stockées de chaque cadre.
